# EUROPEAN PATENT SPECIFICATION

(11) **EP 1 539 544 B1**
(45) Date of publication and mention of the grant of the patent: **18.03.2009**
(21) Application number: 03795558.0
(22) Date of filing: 13.06.2003
(51) Int. Cl.: B60R 21/18

(54) **TUBULAR AIRBAG FOR INSTALLATION IN A VEHICLE**
RÖHRENFÖRMIGER AIRBAG ZUR INSTALLATION IN EINEM FAHRZEUG
AIRBAG TUBULAIRE DESTINE A ETRE INSTALLE DANS UN VEHICULE

(30) Priority: 11.09.2002 DE 10242023
(43) Date of publication of application: 15.06.2005
(73) Proprietor: KEY SAFETY SYSTEMS, INC., Sterling Heights, MI 48314 (US)
(72) Inventor: LINCOLN, Paul, 55283 Nierstein (DE); STAUB, Andreas, 63834 Sulzbach am Main (DE); LOCHMANN, Hans, 65527 Niedernhausen (DE); BIEG, Michael, 65429 Russelsheim (DE)
(74) Representative: Gislon, Gabriele
(86) International application number: PCT/US2003/018453
(87) International publication number: WO 2004/024514

(56) References cited:
- EP-A2- 0 896 909
- EP-A2- 1 179 456
- JP-A- 10 217 818
- JP-A- 2002 160 566
- US-A- 5 480 181
- US-A- 6 142 511
- US-A1- 2001 011 810
- US-B1- 6 224 088
- US-B1- 6 279 944
- US-B1- 6 364 347

## Description

The present invention relates to the use of a seamless continuous tube as an airbag.

EP 0 936 109 B1 describes a tube-shaped airbag, which is installed in the region of the A and B pillars and the roof track of a vehicle and thus spans the side window opening. During the deployment of the airbag, the tube inflates and increases in diameter, while its length decreases significantly. This is necessary for the tube to pull itself out of its accommodation and to create an essentially straight line between its two anchor points. Only in this manner does the tube structure create a taut, semi-rigid component, which is tensed transversely spanning the window opening. These types of tube-shaped airbags or shrouds are manufactured using a weaving machine, whereby the warp and weft threads run at an angle of approximately 45° to the axial direction of the tube.

Due to the flexible structure of this type of tube it is not possible, however, precisely to control or predict its expansion, i.e. its geometric shape change. This type of tube comprises a high number of individual components, resulting in very high manufacturing costs.

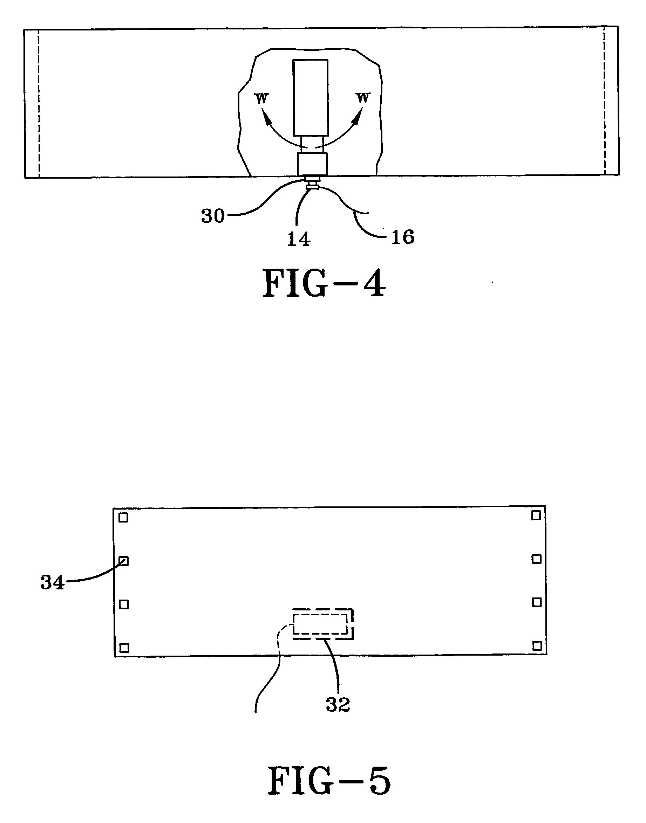

Document EP-A2-1179456 discloses an airbag and a method of forming the airbag. In particular the airbag is useful for the knee or head region vehicle occupant (Figures 5a,5b, 4).

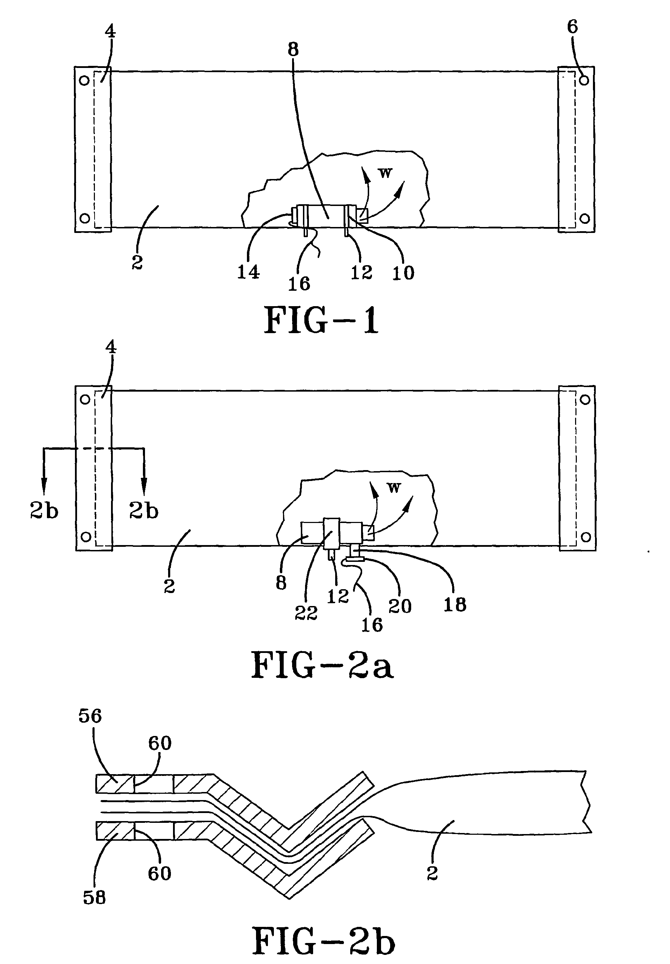

The first three embodiments of EP-A2-1179456 disclose an airbag that is substantially a cylindrical tube folded longitudinally to form a predetermined fold pattern having at least individual looped segments and lateral seam that closes each lateral end thereof (Figures 1-3, 6-9). A cylindrical main region A is produced from a fabric, with the longitudinal sides connected together to form a longitudinal seam, and closed off in the lateral region B by the transverse seams.

A fourth embodiment discloses an airbag that is a substantially cylindrical fabric tube the lateral regions of which are formed by gathering together the ends of the cylindrical region A in the direction of the longitudinal axis of the airbag, and are subsequently closed with clamping elements. The cylindrical fabric tube may be a prefabricated tube woren as a single tubular member.

Document JP 2002 160566 A discloses an expansion equipment for car seats for up heaving the anterior part of a seat cushion in the time of the collision of a car etc., and preventing front migration of a crew hip (submarine phenomenon).

According to the invention a seat having a seat cushion and a seat back is provided with an air belt for hardening the front portion of said seat cushion in the event of emergency such as collision of the vehicle or the like so as to prevent a submarine phenomenon of the passenger.

The air belt comprises an elongated bag shaped inflatable tube fixed with a ring-shaped clamping band and to be inflated by a gas from the inflator, and an elongated bag shaped mesh webbing for covering the inflatable tube, in which the air belt is disposed in the front portion of the base plate of the seat at the mid section along the width between the left and the right. At one of shorter ends of the inflatable tube, there is provided a gas inlet for introducing a gas from the inflator.

There is provided in accordance with the invention an airbag as claimed in claim 1.
Fig. 1 is an elevation view, partially broken away, of a first embodiment of the airbag module.
Fig. 2a is an elevation view, partially broken away, of a second embodiment of the airbag module.
Fig. 2b is a cross sectional view of a section of the second embodiment of the airbag module.
Fig. 3a is an elevation view, partially broken away, of an airbag module, not according to the present invention.
Fig. 3b is a cross sectional view of said unclaimed airbag module taken along line 3b-3b of Fig. 3a.
Fig. 4 is an elevation view, partially broken away, of another unclaimed airbag module.
Fig. 5 is a sectional view of another embodiment of the airbag module.
Fig. 6a is an elevation view of another unclaimed embodiment of an airbag module.
Fig. 6b is a cross sectional view taken along line 6b-6b of Fig. 6a.
Fig. 7 is a top view of a first embodiment of a vehicle seat.
Fig. 8 is a top view of a second embodiment of the vehicle seat.
Fig. 9 is a top view of a third embodiment of the vehicle seat.

There is provided in accordance with the present invention an airbag for an airbag module, an airbag module, a vehicle seat comprising the airbag module and the use of a continuous tube as an airbag, whereby the airbag can be manufactured in a cost-effective manner according to a safe manufacturing process, and whereby its geometric shape change during and after inflation can be essentially predetermined or preset.

Fig. 1 shows a first embodiment of an airbag module according to the invention. The airbag module comprises an airbag 2, the frontal, open ends of which are at least partly closed by closing means 4. The airbag 2 is essentially a section of a continuous tube, which in its inflated state displays an essentially circular cross section along at least most of its length. The two opposite open ends of the airbag 2 are closed by closing means 4 comprising metal clamps. The tube-shaped walls of the airbag 2 are pushed together at its two open ends, i.e. its frontal ends, so that a type of strip-shaped end section is created, which is preferably folded over once towards the opposite end of the middle. This fold or the open end of the airbag 2 is enclosed by the metal clamps 4 so that a gastight closing of the two ends of the airbag 2 is achieved for closing the free ends of the tube and essentially maintaining its original volume and original length during inflation. Part of a conventional tube fabric sold by the meter cut into sections can be used as a continuous tube. Part of a commonly used fire service hose could also serve this purpose. Because of the closing means closing the free ends of the tube, it is of benefit that the gas is held in the tube at least partly and for a predetermined length of time, so that the tube maintains its inflated or filled state for a length of time which can be predetermined or preset.

The airbag is preferably made out of a flexible and/or woven material, so that the airbag displays an unstable cross section in its deflated state. Due to this lack of dimensional stability, the airbag collapses in its deflated state, so that the essentially tube-shaped cross section presents during inflation results in an essentially strip-like cross section during the deflated state. The deflated structure can then be gathered or folded on the inside or in the upholstery of a vehicle seat in a simple and space-saving manner. No complicated folding process is required for installation of the airbag, as is the case in conventional airbags. Due to the woven material, a basic flexibility of the airbag is achieved, so that it can be adapted to a vehicle component structure. This type of tube fabric is generally manufactured by belt web weaving looms or circular weaving looms, by means of which a tube is created, the warp threads of which lie in the axial direction of the tube and the weft threads of which lie transversely thereto. A continuous tube fabric is thus created, which cannot be stretched, yet displays certain flexibility.

The airbag is preferably made out of a single- or multi-layered tube. With a single-layered tube, the gas tightness of which is sufficient for certain uses, a very cost-effective and safe tube can be manufactured. Multi-layered tubes are used in situations where increased gas tightness is required or in which increased resistance against outside influences, e.g. sharp metal edges or the like, is required. To increase the gas tightness, a second layer can be a coating, and can be arranged preferably on the inside or the outside. This coating can be a polyurethane or silicon that has a very high gas tightness with high resistance.

The closing means 4 comprising metal clamps have, at their ends lying opposite the airbag 2, one or several fastening holes 6 therethrough, via which the airbag module can be connected to the vehicle structure by fastening means such as threaded fasteners, screws, bolts, rivets or the like. To this effect several smaller metal clamps, with a predetermined distance between them, can be used for closing the open ends or, preferably, in each case one long metal clamp, extending over the entire length of the tube opening, i.e. the length of which corresponds to essentially half the tube circumference, can be used. The metal clamp or clamps preferably contain a region or part made out of synthetic material. The airbag can be fastened to the vehicle structure by holes through the metal clamps.

An airbag inflator 8 is arranged in the interior of the tube. The airbag inflator 8 is surrounded by clamps 10, to which screws or bolts 12, projecting outwardly in a radial manner, are welded. The fastening means 12 are inserted through corresponding predetermined openings in the airbag 2 and thus project out of the airbag 2. Via these fastening means 12, the entire arrangement can thus be fastened to the vehicle structure of a vehicle or, if desired, merely the airbag inflator 8 can be fastened to the airbag itself 2. At one frontal side of the airbag inflator 8, a plug 14 is located, via which an ignition lead 16 is connected to the airbag inflator 8. The ignition lead 16 projects outwardly through an opening in the airbag 2 and can be connected to an airbag controller a vehicle. During activation the gas emission shown in the direction of arrow W takes place at the side of the airbag inflator 8 opposite the plug 14. Due to the fastening of the airbag inflator in or on the airbag by fastening means, an operationally secure airbag module can be foreseen, since a change in position of the airbag inflator with relation to the airbag does not take place in a crash and thus safe deployment is ensured. The airbag inflator can be arranged outside the airbag with the airbag inflator arranged directly on the airbag or be connected to the latter by a supply line.

Fig. 2a shows a second embodiment of the airbag module according to the invention. The design of the airbag 2 and the closing means 4 as well as the arrangement of the closing means 4 on the airbag 2 are identical to the embodiment shown In Fig. 1. The airbag inflator 8 is also arranged inside the airbag 2 on a wall of the airbag 2. An igniter 18 of the airbag inflator 8 projects outwardly in through an opening in the airbag. On the outwardly projecting side of the Igniter 18, a plug 20 is arranged, via which an ignition lead 16 is connected to the igniter 18 of the airbag inflator 8. A metal bracket 22 encloses the airbag inflator 8 arranged in the airbag 2 from the outside, so the airbag 2 as well as the airbag inflator 8 is securely clamped in the metal bracket. The metal bracket 22 has essentially the shape of an open ring, on the radially outer side of which threaded fasteners 12 are arranged to fasten the airbag module to a vehicle structure.

Fig. 2b shows the closing means 4 of the second embodiment of the airbag module in a magnified cross sectional view. The closing means 4 in this embodiment comprises a clamp, which has an upper part 56 and an essentially congruent to a lower part 58. The two parts 56, 58 are provided with a borehole 60 in alignment to one another for fastening screws or rivets. Preferably, the upper part 56 and/or the lower part 58 or individual regions thereof is/are made out of a synthetic material.

In alternative embodiments, not according to the invention the ends of the tube are closed by gluing, welding, sewing or riveting. To achieve an operationally secure airbag, the ends of the airbag or continuous tube can in this case also be folded down, and the folded down end can be closed by glue, welding, sewing or riveting.

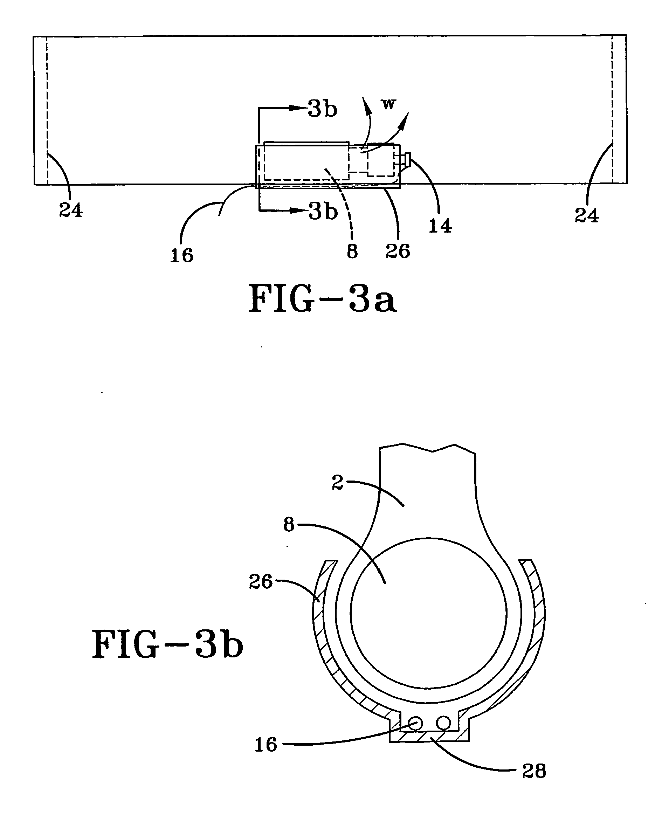

Figs. 3a and 3b show an unclaimed airbag module not according to the invention. The two open ends of the airbag 2 are closed by sewn seams 24, in that the open ends of the airbag 2 are pushed together, such that in these regions an essentially flat strip is created, the layers of which are stitched together. Prior to being sewn, it is beneficial if the open ends can be folded down once or several times towards the opposite end of the airbag to achieve a higher gas tightness. The arrangement of the airbag inflator 8 essentially corresponds to the arrangement shown in the first embodiment The airbag inflator 8 is merely placed inside the airbag 2 and enclosed from the outside by an essentially tube-shaped metal bracket 26. In Fig. 3b, in its cross section the metal bracket 26 has an essentially open ring structure, which at its inner side, opposite the open side of the ring, comprises a cable channel 28 in the form of an outwardly projecting recess. In this cable channel 28, the ignition lead 16 is outwardly guided via an opening in the airbag 2. As in the second embodiment of the present invention, the metal bracket 26 encloses the airbag 2 as well as the airbag inflator 8.

In Fig. 4, the airbag inflator 8 is arranged transversely in the airbag 2 and projects outwardly through an opening in the airbag 2 at the end at which the plug 14 is arranged and is connected to an ignition lead 16. The airbag inflator 8 is connected to the airbag 2 in an essentially gastight manner by a clamping ring 30 arranged on the part of the airbag inflator 8 projecting out of the airbag 2. It is beneficial for a connection with the vehicle structure to be established by the clamping ring 30, in order to achieve a fastening of the airbag module to the vehicle structure.

In another embodiment of the present invention shown in Fig. 5, the airbag inflator 8 is connected to the airbag 2 merely by a weld seam 32. In this case that on the basis of the low stability of the weld seam, the airbag inflator 8 should be unaffected by thrusts, i.e. it should emit the gas in two opposite directions, in order to keep the force acting upon the weld seam 32 to a minimum. The open ends of the airbag 2 are closed in an essentially gastight manner by rivets 34 or other suitable means.

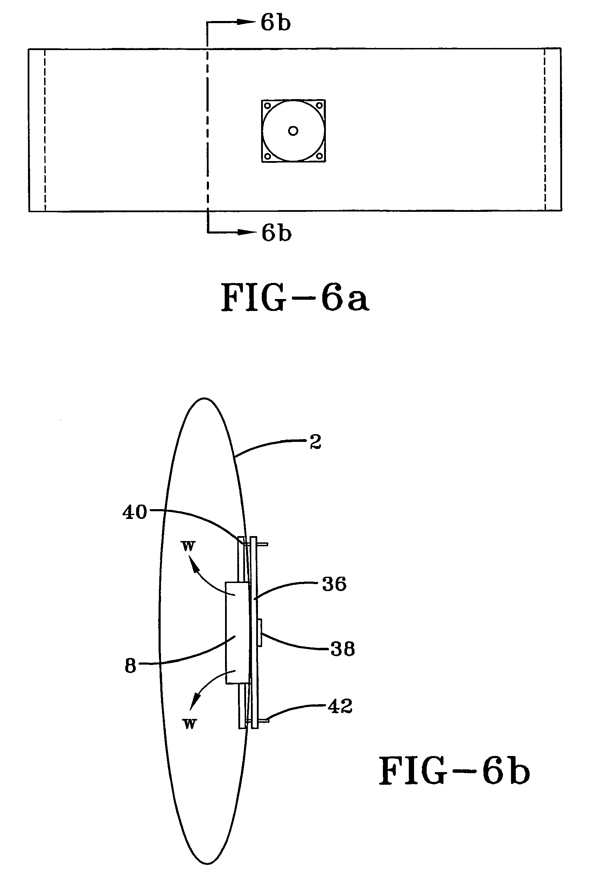

The Figs. 6a and 6b of an unclaimed airbag module show a connection variation of the airbag inflator 8 to the airbag 2, as is known from conventional steering wheel airbags. In this case the fastening means is an airbag inflator base plate 36, to which the airbag inflator 8 is concentrically fastened. An ignition lead connection 38 is arranged on the airbag inflator 8, which ignition lead connection can be connected directly to the airbag controller of a vehicle, in order to thus activate the airbag inflator 8. In addition, the fastening means comprises a support plate 40, which is preferably a ring-shaped plate. Concentrically in this ring-shaped support plate 40 is an opening, the diameter of which essentially corresponds to the outer diameter of the airbag inflator 8. Several threaded fasteners such as threaded bolts 42 are arranged on the support plate 40 in the region of the perimeter of the support plate. The support plate 40 is pushed to the outside from the tube inside of the airbag 2 with the threaded bolts 42 projecting through holes provided in the airbag 2. An opening, which is arranged in the support plate 40 above the opening corresponding to the airbag inflator 8, is arranged in the airbag 2 and corresponds to the outer diameter of the airbag inflator 8. The airbag inflator 8 is placed with the airbag inflator base plate 36 and screwed from the outside upon the outwardly projecting threaded bolts 42. In this way the airbag 2 is clamped between the support plate 40 and the airbag inflator base plate 36 and the opening in the airbag 2 is thus closed in an essentially gastight manner. The airbag module can be securely connected to the vehicle structure via the threaded bolts 42.

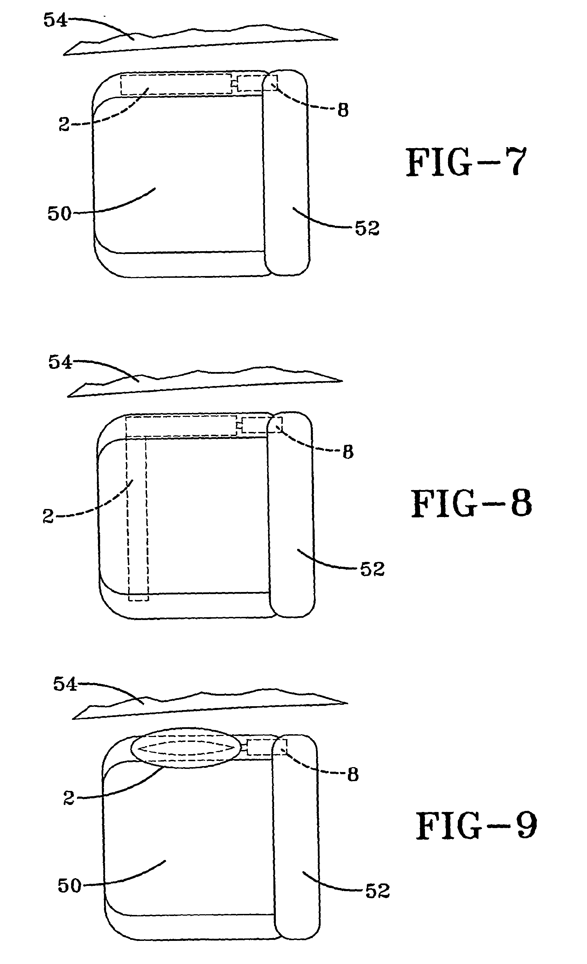

Fig. 7 shows a first embodiment of an arrangement of an airbag module according to the invention installed in a vehicle seat. The vehicle seat comprises a seat cushion 50 and a seat back 52 arranged on one of its sides and standing essentially transverse to a vehicle door 54. The airbag module is arranged in one or both side regions of the seat cushion 50 within the seat and/or as desired in a side and /or front region of the seat cushion. In a crash, the airbag 2 is inflated within the seat, to prevent a seat occupant from sliding under the pelvic belt, known generally as the "submarining effect". Consequently, the level of injuries to the lower extremities as well as to a crushed chest and the overall body impact to a front airbag can be improved. The side arrangement of this airbag ensures a secure lateral stabilization of the vehicle occupants to avoid the vehicle occupants shifting or moving into an undesired position with regard to the side airbag in a side impact.

During the activation of the airbag module the airbag 2 inflates and fills one or both side regions of the seat cushion 50, so that an essentially stiff restraining wall is created in the shape of a "bulge" extending along a lateral edge of the seat cushion. Due to the original volume and the original length of the tube remaining constant, the space requirement or space demand can be predetermined for the inflated airbag, whereby an exact configuration of the vehicle bodies surrounding the airbag can take place. In addition, due to the use of a conventional continuous tube, manufacturing costs of the airbag can be drastically lowered and due to the absence of a seam, an airbag can be created in a safe manufacturing process, since there is no risk of a seam tearing. The vehicle seat is preferably designed in such a manner that during inflation of the airbag the outer seat cover material remains undamaged. It can thus be avoided that during deployment of the airbag, components of the inside of the seat are flung into the passenger space and come into contact with the occupants.

In the second embodiment shown in Fig. 8 of a vehicle seat according to the invention, the airbag 2 is arranged in a side and front region of the seat cushion 50. In this way, the side region and front region of the seat cushion 50 stiffens and rises during the deployment of the airbag, so that a "submarining effect" can be avoided, i.e. the forward slipping of a vehicle occupant on the seat cushion 50 is prevented in that the front region of the seat cushion 50 is raised and/or stiffened.

The seat can be designed such that during inflation of the airbag, the outer seat material tears open at preset and predetermined regions in a controlled manner, to enable at least part of the airbag to exit onto the surface. An airbag of a higher volume can thus be used to achieve an improvement position securing of the vehicle occupants. Through the controlled tearing open of the outer seat material, it is ensured that the function of the airbag is not restricted and that thus the airbag can work optimally. Fig. 9 shows a third embodiment of the vehicle seat according to the invention. The seat cushion 50 or the seat is designed in such a manner that during an activation of the airbag module and inflation of the airbag 2, on the basis of the latter's increase in volume, the outer seat material tears open in a controlled manner at predetermined or preset regions, e.g. tear seams.

It is preferable that the closing means close the tube only partly, to enable a pressure release of the airbag after its inflation. Due to a release in pressure, easier access to the vehicle occupant involved in the crash is rendered possible, since an airbag under low pressure displays low consistency or dimensional stability. The airbag can thus be easily removed from the vehicle region in question. In addition, through a corresponding arrangement of the closing means, the length of time after which the release in pressure takes place, can be predetermined, so that the protection effect or period, namely the time that the airbag is fully inflated, can be determined according to each specific crash situation, since in the event of a vehicle turning over a considerably longer protection period of the airbag is required than in the event of a vehicle not rolling over.

An airbag according to the invention may be arranged in a side region of the seat back. This prevents a lateral slipping of the upper body of the occupants in a crash. In this way the upper body of the vehicle occupants is secured in its position with regard to the front airbag, which in the event of a crash leads to significantly reduced injuries of the upper extremities.

The airbag module according to the invention is used so that the airbag is arranged in the vehicle compartment positioned to protect the leg, especially the knee of a seat occupant. The airbag is accommodated in a region at knee height behind the instrument panel. In a crash, major injuries to the knees are prevented, since in a crash the knees collide with the airbag and contact with the instrument panel is avoided.

Furthermore, the airbag module according to the invention is used so that the airbag is arranged in the foot region under the foot mat or floor casing of a vehicle. During the activation of this type of foot airbag the feet are lifted up and held away from the region of the pedals. In this case the feet are protected from the pedals, whereby improved protection effect is achieved for the entire shin and foot region.

## Claims

1. An airbag (2) comprising a seamless continuous tube formed from a flexible and/or woven material, so that the airbag (2) displays an unstable cross section in its deflated state, at least partly gastight with closing means (4) for closing the free ends of the tube, **characterized in that** said closing means (4) comprising one or several metal clamps pushing together the tube-shaped walls of the airbag (2) to create a type of strip-shaped end section, the airbag when inflated essentially maintaining an original volume and an original length.

2. An airbag (2) according to claim 1 wherein the airbag comprises a multi-layered tube.

3. An airbag (2) according to claim 1 wherein the airbag comprises a single layered tube.

4. An airbag (2) according to claim 1 wherein the metal clamps close the open ends of the tube and connect the airbag (2) to a vehicle structure.

5. An airbag (2) according to claim 1 wherein the closing means close the tube only partly, to enable the pressure release of the airbag (2) after its inflation.

6. An airbag according to any of claims 1 - 5 assembled with an airbag inflator (8) arranged to provide inflation gas to the interior of the airbag (2), the airbag inflator (8) fasted to the airbag by one of: a threaded fastener arranged on the airbag inflator (8) to project through a hole in the airbag (2); or a metal bracket that is arranged outside the airbag (2), and encloses at least partly the airbag and therein arranged airbag inflator (8) from the outside; or a clamping ring (30), which can be arranged on the part of the airbag inflator (8) which partly projects from the airbag (2), in order to create an at least partly gastight, interlocking connection between the airbag inflator (8) and the airbag (2) arranged between the airbag inflator (8) and the clamping ring (30); or by gluing, welding, sewing or riveting; or a base plate fastened to the airbag inflator (8) and a support plate arranged within the airbag, so that the airbag (2) is clamped between the base plate and the support plate.

7. An airbag (2) according to any of claims 1 - 6 assembled with a vehicle seat comprising a seat back (52) and a seat cushion (50), the airbag (2) being located in a side region of the seat back (52).

8. An airbag according to any of claims 1 - 7 assembled with a vehicle seat comprising a seat back (52) and a seat cushion (50), the airbag (2) being located in a side region of the seat cushion (50).

9. An airbag (2) according to any of claims 9 - 7 assembled with a vehicle seat comprising a seat back (52) and a seat cushion (50), the airbag (2) being located in a front region of the seat cushion (50).

## Patentansprüche

1. Airbag (2), der eine nahtlose durchgehende Röhre umfasst, die aus einem flexiblen und/oder gewebten Material geformt ist, so dass der Airbag (2) in seinem abgelassenen Zustand einen instabilen Querschnitt zeigt, wenigstens teilweise gasdicht, mit Verschlussmitteln (4) zum Verschließen der freien Enden der Röhre, **dadurch gekennzeichnet, dass** die Verschlussmittel (4) eine oder mehrere Metallklammern umfassen, welche die röhrenförmige Wände des Airbags (2) zusammendrücken, um eine Art von streifenförmiger Endsektion zu erzeugen, wobei der Airbag, wenn er aufgeblasen ist, im Wesentlichen ein ursprüngliches Volumen und eine ursprüngliche Länge beibehält.

2. Airbag (2) nach Anspruch 1, wobei der Airbag eine mehrlagige Röhre umfasst.

3. Airbag (2) nach Anspruch 1, wobei der Airbag eine einlagige Röhre umfasst.

4. Airbag (2) nach Anspruch 1, wobei die Metallklammern die offenen Enden der Röhre verschließen und den Airbag (2) mit einer Fahrzeugstruktur verbinden.

5. Airbag (2) nach Anspruch 1, wobei die Verschlussmittel die Röhre nur teilweise verschließen, um die Druckentlastung des Airbags (2) nach dessen Aufblasen zu ermöglichen.

6. Airbag nach einem der Ansprüche 1 bis 5, zusammengebaut mit einer Airbag-Aufblasvorrichtung (8), die dafür angeordnet ist, Aufblasgas in das Innere des Airbags (2) zu liefern, wobei die Airbag-Aufblasvorrichtung (8) durch eine der folgenden Komponenten an dem Airbag befestigt ist: ein mit Gewinde versehenes Befestigungselement, das so an der Airbag-Aufblasvorrichtung (8) angeordnet ist, dass es durch ein Loch in dem Airbag (2) vorspringt, oder einen Metallhalter, der außerhalb des Airbags (2) angeordnet ist und den Airbag und die darin angeordnete Airbag-Aufblasvorrichtung (8) wenigstens teilweise von der Außenseite umschließt, oder einen Klemmring (30), der an dem Teil der Airbag-Aufblasvorrichtung (8) angeordnet sein kann, der teilweise von dem Airbag (2) vorspringt, um eine wenigstens teilweise gasdichte, formschlüssige Verbindung zwischen der Airbag-Aufblasvorrichtung (8) und dem Airbag (2) zu erzeugen, angeordnet zwischen der Airbag-Aufblasvorrichtung (8) und dem Klemmring (30), oder durch Kleben, Schweißen, Nähen oder Nieten, oder eine an der Airbag-Aufblasvorrichtung (8) befestigte Grundplatte und eine innerhalb des Airbags angeordnete Auflageplatte, so dass der Airbag (2) zwischen der Grundplatte und der Auflageplatte festgeklemmt ist.

7. Airbag nach einem der Ansprüche 1 bis 6, zusammengebaut mit einem Fahrzeugsitz, der eine Sitzlehne (52) und ein Sitzkissen (50) umfasst, wobei der Airbag (2) in einem Seitenbereich der Sitzlehne (52) angeordnet ist.

8. Airbag nach einem der Ansprüche 1 bis 7, zusammengebaut mit einem Fahrzeugsitz, der eine Sitzlehne (52) und ein Sitzkissen (50) umfasst, wobei der Airbag (2) in einem Seitenbereich des Sitzkissens (50) angeordnet ist.

9. Airbag nach einem der Ansprüche 1 bis 7, zusammengebaut mit einem Fahrzeugsitz, der eine Sitzlehne (52) und ein Sitzkissen (50) umfasst, wobei der Airbag (2) in einem Frontbereich des Sitzkissens (50) angeordnet ist.

## Revendications

1. Coussin gonflable (2) comprenant un tube continu sans raccord formé à partir d'un matériau flexible et/ou tissé, de sorte que le coussin gonflable (2) affiche une section transversale instable dans son état dégonflé, au moins partiellement étanche au gaz avec un moyen de fermeture (4) pour fermer les extrémités libres du tube, **caractérisé en ce que** ledit moyen de fermeture (4) comprend une ou plusieurs fixations métalliques qui rapprochent par poussée les parois en forme de tube du coussin gonflable (2) pour créer un type de section d'extrémité en forme de bande, le coussin gonflable, dans son état gonflé, gardant essentiellement un volume d'origine et une longueur d'origine.

2. Coussin gonflable (2) selon la revendication 1, dans lequel la coussin gonflable comprend un tube à plusieurs couches.

3. Coussin gonflable (2) selon la revendication 1, dans lequel le coussin gonflable comprend un tube à couche unique.

4. Coussin gonflable (2) selon la revendication 1, dans lequel les fixations métalliques ferment les extrémités ouvertes du tube et connectent le coussin gonflable (2) à une structure de véhicule.

5. Coussin gonflable (2) selon la revendication 1, dans lequel les moyens de fermeture ferment le tube seulement en partie, pour permettre la libération de pression du coussin gonflable (2) après son gonflement.

6. Coussin gonflable selon l'une quelconque des revendications 1 à 5 assemblé avec un dispositif de gonflement du coussin gonflable (8) disposé pour fournir le gaz de gonflement l'intérieur du coussin gonflable (2), le dispositif de gonflement du coussin gonflable (8) étant fixé au coussin gonflable par l'un des moyens suivants : une attache filetée disposée sur le dispositif de gonflement du coussin gonflable (8) pour s'étendre à travers un trou dans le coussin gonflable (2) ; ou une patte métallique qui est disposée à l'extérieur du coussin gonflable (2) et renferme au moins partiellement le coussin gonflable et le dispositif de gonflement du coussin gonflable (8) disposé dans celui-ci depuis l'extérieur; ou un anneau de fixation (30), qui peut être disposé sur la partie du dispositif de gonflement du coussin gonflable (8) qui s'étend partiellement depuis le coussin gonflable (2), afin de créer une connexion par liaison de forme au moins partiellement étanche au gaz entre le dispositif de gonflement du coussin gonflable (8) et le coussin gonflable (2) disposé entre le dispositif de gonflement du coussin gonflable (8) et l'anneau de fixation (30) ; ou par collage, soudage, couture ou par rivetage ; ou une plaque de base fixée au dispositif de gonflement du coussin gonflable (8) et une plaque de support disposée à l'intérieur du coussin gonflable, de sorte que le coussin gonflable (2) est serré entre la plaque de base et la plaque de support.

7. Coussin gonflable (2) selon l'une quelconque des revendications 1 à 6, assemblé avec un siège de véhicule comprenant un dossier de siège (52) et un coussin de siège (50), le coussin gonflable (2) étant positionné dans une région latérale du dossier de siège (52).

8. Coussin gonflable selon l'une quelconque des revendications 1 à 7, assemblé avec un siège de véhicule comprenant un dossier de siège (52) et un coussin de siège (50), le coussin gonflable (2) étant positionné dans une région latérale du coussin de siège (50).

9. Coussin gonflable (2) selon l'une quelconque des revendications 1 à 7, assemblé avec un siège de véhicule comprenant un dossier de siège (52) et un coussin de siège (50), le coussin gonflable (2) étant positionné dans une région frontale du coussin de siège (50).
